# EUROPÄISCHE PATENTSCHRIFT

(11) **EP 2 494 499 B1**
(45) Veröffentlichungstag und Bekanntmachung des Hinweises auf die Patenterteilung: **23.12.2015**
(21) Anmeldenummer: 10771094.9
(22) Anmeldetag: 25.10.2010
(51) Int. Cl.: G06K 13/08, G06K 17/00

(54) **DOKUMENTENWECHSLER**
DOCUMENT CHANGER
CHANGEUR DE DOCUMENTS

(30) Priorität: 26.10.2009 DE 102009050909
(43) Veröffentlichungstag der Anmeldung: 05.09.2012
(73) Patentinhaber: Bundesdruckerei GmbH, 10969 Berlin (DE)
(72) Erfinder: WURM, Helmut, 1716 Schwarzsee (CH); KRAMER, Thomas, 80805 München (DE); RICHTER, Werner, 80999 München (DE)
(74) Vertreter: Patentanwälte Bressel und Partner mbB
(86) Internationale Anmeldenummer: PCT/EP2010/066092
(87) Internationale Veröffentlichungsnummer: WO 2011/051239

(56) Entgegenhaltungen:
- DE-A1- 19 709 562
- DE-A1-102006 057 830
- DE-A1-102006 057 831
- DE-A1-102007 054 441

## Beschreibung

### Gebiet der Erfindung

Die Erfindung betrifft eine Vorrichtung zum Austausch von Dokumenten und ein Verfahren zum Austauschen von Dokumenten.

### Stand der Technik

Bei der Personalisierung eines Dokuments werden zur Erhöhung der Sicherheit der Dokumente verschiedene Personalisierungsverfahren eingesetzt. Insbesondere werden mittels Lasergravur personenbezogene Daten in das Dokument eingeschrieben und mittels RFID diese Daten auch auf einem Chip im Dokument gespeichert. Es können weitere Schritte der Personalisierung eingebunden sein, zum Beispiel eine Qualitätskontrolle oder die Einbringung zusätzlicher Daten, zum Beispiel mittels Tintenstrahldrucks. Diese Schritte sind verschieden schnell. Insbesondere ist die Speicherung der personenbezogenen Daten auf den Chip über die RFID-Schnittstelle im Vergleich zu allen anderen genannten Schritten sehr langsam. Um eine optimale Auslastung aller Bearbeitungsstationen zu erreichen, können entsprechend viele RFID-Bearbeitungsstationen vorhanden sein.

Typische Bearbeitungsstationen dienen zum Beispiel der Laserpersonalisierung, der Inkjet-Personalisierung, der Aufbringung von Patches, insbesondere Hologrammen, der Personalisierung von Chips, insbesondere RFID-Chips, der Lackierung, insbesondere mit einem Abriebsschutzlack, sowie der optischen und/oder elektronischen Qualitätskontrolle. Ferner sind als Bearbeitungsstationen auch das Eingabemodul für Dokumentenrohlinge und das Ausgabemodul für die fertig personalisierten Dokumente sowie Blätterstationen zum Aufblättern buchförmiger Dokumente zu betrachten.

Die Bearbeitungsstationen zur Personalisierung, auch Module genannt, können zum Beispiel entlang einer Personalisierungsstrecke angeordnet sein. Die Dokumente werden zum Beispiel mittels eines Förderbandes von Modul zu Modul transportiert. Alternativ können die Module um ein Robotersystem herum angeordnet sein, wobei die Dokumente durch den Roboter den Modulen zugeführt und wieder entnommen werden. Robotersysteme sind besonders flexibel, sodass ohne Umbau des Systems verschiedene Dokumente, welche mit verschiedenen Mitteln personalisiert werden, gleichzeitig auf einer Anlage personalisiert werden können.

In Robotersystemen ist es üblich, dass der Roboter ein Werkstück aus einer ersten Station entnimmt und zu einer weiteren Station transportiert. In einem weiteren Schritt wird ein neues Werkstück in die erste Station transportiert. Der Durchsatz einer solchen Einrichtung ist auf die Geschwindigkeit des Transports zwischen den Werkstücken limitiert, sofern nicht einzelne, nicht parallelisierbare Prozessschritte geschwindigkeitsbestimmend sind.

Ist in einem Modul ein Dokument bearbeitet worden, so wird dieses zur Entnahme durch den Roboter bereitgestellt. Zum Austausch dieses bearbeiteten Dokuments gegen ein unbearbeitetes Dokument muss zunächst das bearbeitete Dokument entfernt werden. Anschließend kann das unbearbeitete Dokument in das Modul eingebracht werden.

DE 102007054441 offenbart den Oberbegriff von Anspruch 1.

Problem nach dem Stand der Technik und Aufgabe der Erfindung

Die Bewegungsabläufe eines Roboters sind heute bereits soweit optimiert, dass eine weitere Steigerung des Durchsatzes durch Optimierung des Roboters, insbesondere des Bewegungsablaufes des Roboters, nicht mehr möglich ist. Entnimmt der Roboter jedoch ein Dokument aus einem Modul, so steht dieses ungenutzt still, bis der Roboter ein neues Dokument übergibt.

Es stellt sich die Aufgabe, die Auslastung aller Module durch einen effizienten Austausch eines personalisierten Dokuments gegen ein noch nicht personalisiertes Dokument zu optimieren und so den Durchsatz zu erhöhen.

Beschreibung der Erfindung und bevorzugte Ausführungsformen

Die Aufgabe wird durch eine Vorrichtung gemäß Anspruch 1 sowie ein Verfahren gemäß Anspruch 8 gelöst. Bevorzugte Ausführungsformen der Erfindung sind in den Unteransprüchen angegeben.

Die erfindungsgemäße Vorrichtung, die zum Austauschen von bereits bearbeiteten Dokumenten gegen noch unbearbeitete Dokumente geeignet und an einer Bearbeitungsstation für zu bearbeitende Dokumente platzierbar ist, weist einen ersten Aufnahmeplatz zur Aufnahme eines ersten bereits bearbeiteten Dokuments und einen zweiten Aufnahmeplatz zur Aufnahme eines zweiten noch unbearbeiteten Dokuments auf. Ferner verfügt die Vorrichtung über Mittel zum Einfahren des ersten Dokuments auf den ersten Aufnahmeplatz sowie Mittel zum Ausfahren des zweiten Dokuments von dem zweiten Aufnahmeplatz. Die Vorrichtung ist derart ausgebildet, dass das Einfahren des ersten Dokumentes auf den ersten Aufnahmeplatz synchron zum Ausfahren des zweiten Dokumentes von dem zweiten Aufnahmeplatz erfolgt. Durch den synchronen Austausch der Dokumente wird die Zeit, die für deren Austausch benötigt wird, minimiert. Hierdurch werden der Stillstand eines Moduls während des Dokumentenaustausches reduziert und der Durchsatz der Maschine erhöht (erhöhte Maschinenleistung und verkürzte Dokumentenwechselzeiten).

In einer bevorzugten Ausführungsform der Erfindung sind in der Vorrichtung zum Austausch von Dokumenten der erste Aufnahmeplatz ein erstes Aufnahmefach und der zweite Aufnahmeplatz ein zweites Aufnahmefach. Unter einem Aufnahmefach ist ein Hohlraum in einer Vorrichtung zur Aufnahme eines Dokuments mit wenigstens einer Öffnung zur Zu- und Abführung des Dokuments zu verstehen. Der Hohlraum ist hinsichtlich der Größe und Form zur Aufnahme eines Dokuments geeignet.

In einer bevorzugten weiteren Ausführungsform der Erfindung sind der erste und der zweite Aufnahmeplatz zur Aufnahme eines kartenförmigen Dokuments insbesondere im Format ID1 ausgebildet. Unter ID1 wird gemäß ISO/IEC 7810 ein Dokument mit den Maßen 85,6 mm × 54 mm verstanden. ID1 Karten weisen gemäß ISO/IEC 7813 ferner eine Stärke von 0,76 mm auf. Die exakten Maße der Dokumente können innerhalb der in diesen Normen genannten Grenzen von diesen exakten Werten abweichen, beispielsweise beträgt die typische Dicke eines kartenförmigen ID1 Dokuments 0,8 mm. Daher richten sich die Abmessungen des Hohlraumes nach diesen Maßen.

In einer weiteren bevorzugten Ausführungsform der Erfindung sind die Mittel zum Einfahren und die Mittel zum Ausfahren durch rotatorische Transportelemente bzw. Halteelemente, insbesondere Reibrollen und/oder Reibwalzen, beispielsweise mit einer Gummioberfläche, gebildet. Insbesondere weist die Vorrichtung mindestens eine zwischen dem ersten Aufnahmeplatz und dem zweiten Aufnahmeplatz angeordnete Reibrolle oder Reibwalze auf (Umlenkrad oder Umlenkwalze/rolle). Diese mindestens eine gemeinsame Reibrolle oder Reibwalze kann sowohl das erste Dokument als auch das zweite Dokument antreiben.

Alternativ können die Mittel zum Einfahren und die Mittel zum Ausfahren auch durch Greifelemente oder Klemmelemente, insbesondere Zangen und/oder andere Greifer, gebildet sein. In diesem Falle sind diese Greifer so gesteuert, dass sie das jeweilige Dokument dann freigeben, wenn es aus dem Aufnahmeplatz vollständig ausgefahren ist (und damit in eine Bearbeitungsstation oder in eine andere Funktionseinheit, beispielsweise einen Speicher), bzw. dann greifen, wenn es zwar noch nicht eingefahren ist aber eingefahren werden soll. Um eine synchrone Bewegung der Greifer zu erreichen, können diese in einer gekoppelten Führungsbahn geführt werden. Um die Dokumente zu greifen bzw. wieder frei zu geben, sind die Greifer gesteuert. Ein Greifer gibt ein Dokument frei, wenn es in eine Funktionseinheit vollständig eingefahren worden ist.

Alternativ können auch andere Transportelemente, wie durch Öffnungen in den Dokumenten greifende Halteelemente, beispielsweise Stifte, für das Ein- und Ausfahren der Dokumente in den bzw. aus der Vorrichtung zum Austausch vorhanden sein. Die genannten Transportmittel können die Dokumente durch kraft- oder formschlüssigen Transport schieben oder schleppen.

In einer weiteren bevorzugten Ausführungsform der Erfindung ist der zweite Aufnahmeplatz oberhalb des ersten Aufnahmeplatzes angeordnet. Die Aufnahmeplätze haben in erster Näherung die Form der Dokumente, welche auf die Aufnahmeplätze überführt bzw. in die Aufnahmefächer eingeführt werden können. Somit ergibt sich für die Vorrichtung eine besonders kompakte Bauweise, wenn die beiden Aufnahmeplätze übereinander angeordnet sind. Weiter führt die Schwerkraft dazu, dass ein aus dem oberen Aufnahmeplatz bzw. -fach ausgefahrenes Dokument unter der Wirkung der Schwerkraft auf die Ebene des unteren Aufnahmeplatzes bzw. -fachs fallen kann.

In einer weiteren bevorzugten Ausführungsform der Erfindung weist die erfindungsgemäße Vorrichtung zum Austauschen gegenüber dem ersten und dem zweiten Aufnahmeplatz wenigstens eine Symmetrieachse auf. Die Vorrichtung ist um wenigstens eine insbesondere horizontale Symmetrieachse drehbar. Wird die Vorrichtung um die Symmetrieachse gedreht, so werden durch die Drehung der Vorrichtung der erste und der zweite Aufnahmeplatz vertauscht.

In einer weiteren bevorzugten Ausführungsform der Erfindung sind der erste Aufnahme platz bzw. das erste Aufnahmefach und der zweite Aufnahmeplatz bzw. das zweite Aufnahmefach derart übereinander angeordnet, dass die in die Aufnahmeplätze bzw. -fächer überführbaren bzw. einfahrbaren Dokumente zueinander parallel angeordnet sind. Durch diese Anordnung wird eine sehr kompakte Bauweise ermöglicht, da die Dokumente typischerweise flach ausgebildet sind. Zwischen dem ersten Aufnahmeplatz bzw. -fach und dem zweiten Aufnahmeplatz bzw. -fach verläuft die Symmetrieachse, wobei die Symmetrieachse parallel zu einer Längsersteckungsrichtung der Aufnahmefächer verläuft. Bei Drehung um die Symmetrieachse werden die Aufnahmeplätze bzw. -fächer vertauscht.

In einer weiteren bevorzugten Ausführungsform der Erfindung sind der erste Aufnahmeplatz bzw. das erste Aufnahmefach und der zweite Aufnahmeplatz bzw. das zweite Aufnahmefach derart übereinander angeordnet, dass die Aufnahmeplätze bzw. -fächer und somit auch die in die Aufnahmeplätze bzw. -fächer überführten bzw. eingefahrenen Dokumente nicht zueinander parallel angeordnet sind, sondern dass diese eine Verkippung zueinander aufweisen (geneigt zueinander angeordnet sind). Die Aufnahmeplätze bzw. -fächer sind insbesondere unter einem Winkel < 90 und> 10° zueinander angeordnet. Die Verkippung ist derart, dass die Kanten der Dokumente an der Seite der Aufnahme bzw. Ausgabe des jeweiligen Aufnahmeplatzes bzw. -faches parallel zueinander angeordnet sind und einen geringeren Abstand zueinander aufweisen als die diesen Kanten gegenüberliegenden Kanten des Dokuments, d.h. die Ebenen, in denen die Aufnahmeplätze bzw. -fächer liegen, schneiden sich in einer Geraden. Dort kann sich ein Anschlag befinden, der zur Positionierung des ausgefahrenen Dokuments dient. Die Symmetrieachse verläuft in diesem Falle mittig zwischen den Aufnahmeplätzen bzw. -fächern entlang einer Winkelhalbierenden zwischen den Längserstreckungsrichtungen bzw. Ebenen der Aufnahmeplätze bzw. -fächer.

In einer weiteren bevorzugten alternativen Ausführungsform der Erfindung sind der erste Aufnahmeplatz und der zweite Aufnahmeplatz in einer gemeinsamen Ebene angeordnet. Die Symmetrieachse erstreckt sich parallel zur Flächennormalen der Ebene und liegt in der Mitte zwischen den Aufnahmeplätzen. Es ist selbstverständlich möglich, dass die Aufnahmeplätze aus der gemeinsamen Ebene herausgedreht sein können, sodass sich eine Geometrie analog eines Propellers ergibt.

Weiter betrifft die Erfindung eine Anordnung der erfindungsgemäßen Vorrichtung zum Austausch von Dokumenten und einer Aufnahmevorrichtung für die Dokumente, etwa für eine Bearbeitungsstation, wobei die Aufnahmevorrichtung einen dritten Aufnahmeplatz aufweist. Der dritte Aufnahmeplatz der Aufnahmevorrichtung und der erste Aufnahmeplatz der erfindungsgemäßen Vorrichtung sind in der gleichen Ebene angeordnet. Der zweite Aufnahmeplatz kann oberhalb oder unterhalb der Ebene des ersten und des dritten Aufnahmeplatzes angeordnet sein. Hierdurch kann die Vorrichtung zum Austauschen flexibel eingesetzt werden, unabhängig davon, ob sich das zweite Dokument auf dem oberen oder unteren Aufnahmeplatz befindet. Ein Drehen der Vorrichtung ist nicht notwendig. Das erste Dokument kann direkt vom dritten Aufnahmeplatz auf den ersten Aufnahmeplatz eingefahren werden. Wird das zweite Dokument von dem zweiten Aufnahmeplatz ausgefahren, so wird dieses beispielsweise durch eine Führung, beispielsweise eine keilförmig erweiterte Öffnung, derart geführt, dass das zweite Dokument von der Ebene des zweiten Aufnahmeplatzes und in die Ebene des dritten Aufnahmeplatzes geführt wird. Hierzu weist die keilförmige Führung bevorzugt einen Winkel von maximal 45° gegenüber der Ebene des dritten Aufnahmefaches auf, besonders bevorzugt von maximal 30°. Die keilförmige Führung ist gegenüber der Ebene des dritten Aufnahmefaches vorzugsweise symmetrisch. Hierdurch wird eine variable Zuführung des zweiten Dokuments oberhalb oder unterhalb der Ebene ermöglicht.

Das erfindungsgemäße Verfahren zum Austauschen eines ersten bereits bearbeiteten Dokuments gegen ein zweites noch unbearbeiteten Dokument an einer Bearbeitungsstation (Funktionseinheit) für zu bearbeitende Dokumente dient dem gleichzeitigen Aufnehmen eines ersten Dokuments von einer Bearbeitungsstation und Übergeben eines zweiten Dokuments in die Bearbeitungsstation. Hierzu werden die Dokumente in eine Übergabeposition gebracht. Zu Beginn eines Austauschzyklus' befindet sich das zweite noch nicht bearbeitete Dokument auf dem zweiten Aufnahmeplatz der an der Bearbeitungsstation platzierten Vorrichtung zum Austausch von Dokumenten, wie oben beschrieben. Das erste bereits fertig bearbeitete Dokument befindet sich zunächst auf einem dritten Aufnahmeplatz an der Bearbeitungsstation, wobei der dritte Aufnahmeplatz Bestandteil der Bearbeitungsstation ist oder an diese angedockt ist. Das erste Dokument wird dann von dem dritten Aufnahmeplatz an den ersten Aufnahmeplatz der Vorrichtung übergeben, und gleichzeitig wird das zweite Dokument von dem zweiten Aufnahmeplatz der Vorrichtung an den dritten Aufnahmeplatz übergeben ("fliegender Wechsel" der Dokumente auf dem dritten Aufnahmeplatz).

In einer bevorzugten Ausführungsform des erfindungsgemäßen Verfahrens zum Austauschen von Dokumenten wird das erste Dokument auf dem dritten Aufnahmeplatz so positioniert, dass es über diesen Aufnahmeplatz übersteht. Hierdurch ist die Kante des ersten Dokuments, welche der erfindungsgemäßen Vorrichtung zum Austausch von Dokumenten zugewandt ist, frei zugänglich, beispielsweise greifbar. Das erste Dokument kann auf diese Weise von der Austauschvorrichtung, insbesondere den Reibrollen und/oder Reibwalzen der Austauschvorrichtung, erfasst und in die Austauschvorrichtung eingezogen werden.

In einer weiteren bevorzugten Ausführungsform der Erfindung umfasst das Verfahren nach der Übergabe des zweiten Dokuments auf den dritten Aufnahmeplatz das Vertauschen des ersten Aufnahmeplatzes und des zweiten Aufnahmeplatzes der Austauschvorrichtung durch Drehen der Vorrichtung. Hierzu wird die Austauschvorrichtung um ihre vorzugsweise horizontale Symmetrieachse um 180° gedreht, wodurch die Aufnahmeplätze vertauscht werden. Hierdurch wird erreicht, dass das von der Bearbeitungsstation an die Austauschvorrichtung übergebene Dokument an eine Position in der Austauschvorrichtung überführt wird, von der aus es unter Wiederholung des erfindungsgemäßen Verfahrens an einer anderen, beispielsweise der im Bearbeitungszyklus nächsten, Bearbeitungsstation wieder ausgegeben werden kann und zwar auf einen dort vorhandenen dritten Aufnahmeplatz.

In einer weiteren bevorzugten Ausführungsform des erfindungsgemäßen Verfahrens wird das zweite Dokument aus dem zweiten Aufnahmeplatz der Austauschvorrichtung ausgefahren und fällt unter der Wirkung der Schwerkraft nach vollständigem Ausfahren aus der Austauschvorrichtung auf den dritten Aufnahmeplatz.

Die erfindungsgemäße Vorrichtung kann als Greifer oder anders geartetes Halteelement am Ende eines Armes eines Roboters angeordnet sein. Das Halteelement übergibt die unbearbeiteten Dokumente an eine Bearbeitungsstation und übernimmt die bearbeiteten Dokumente von der Bearbeitungsstation und transportiert diese von einer Bearbeitungsstation zu nächsten. Die erfindungsgemäße Vorrichtung kann aber auch Bestandteil der Bearbeitungsvorrichtung sein, während der Roboter ein herkömmliches Halteelement nach dem Stand der Technik aufweist, welcher nur ein einzelnes Dokument aufnehmen kann.

Vorzugsweise umfasst das erfindungsgemäße Verfahren folgenden Verfahrensablauf:
Ein Roboter, an dem die erfindungsgemäße Austauschvorrichtung angebracht ist, platziert die Austauschvorrichtung an einer Bearbeitungsstation beispielsweise zur Personalisierung des Dokuments. Die Austauschvorrichtung weist in diesem Falle einen oder mehrere Halteelemente bzw. Greifer zur Übernahme bzw. Übergabe von Dokumenten auf. Dabei stehen die Halteelemente in Übernahmeposition. Das der Bearbeitungsstation nächststehende erste Halteelement übernimmt zunächst, beispielsweise durch Schließen des Greifers, sodass ein erstes fertig bearbeitetes Dokument, beispielsweise ein ID1-Dokument, aus der Bearbeitungsstation herausgezogen werden kann. Gleichzeitig bewegt sich ein mit dem ersten Halteelement in einer gekoppelten Führungsbahn stehendes zweites Halteelement mit dem in der Austauschvorrichtung herangefahrenen zweiten noch nicht bearbeiteten Dokument in die Bearbeitungsstation hinein. Diese Bewegungen erfolgen synchron. Die beiden Dokumente berühren sich dabei nicht. Nachdem die Dokumente ihre Endposition erreicht haben (das erste Dokument ist in die Austauschvorrichtung eingefahren, und das zweite Dokument ist in die Bearbeitungsstation eingefahren), öffnet der nunmehr das Bearbeitungsstation nächststehende zweite Halteelement und gibt das zweite Dokument frei. Der Roboter fährt dann, versehen mit dem personalisierten ersten Dokument zu einer weiteren Bearbeitungsstation oder zu einem Speicher.

In einer weiteren bevorzugten Ausführungsform des erfindungsgemäßen Verfahrens werden vor dem Dokumentenaustausch der erste Aufnahmeplatz und der dritte Aufnahmeplatz in eine Ebene gebracht. Der dritte Aufnahmeplatz weist bevorzugt eine zur Austauschvorrichtung ausgerichtete Führung, beispielsweise eine keilförmig erweiterte Öffnung, auf. Der zweite Aufnahmeplatz kann oberhalb oder unterhalb der Ebene des ersten und des dritten Aufnahmeplatzes angeordnet sein. Das erste Dokument kann direkt vom dritten Aufnahmeplatz in der Aufnahmevorrichtung der Bearbeitungsstation auf den ersten Aufnahmeplatz überführt werden. Wird das zweite Dokument vom zweiten Aufnahmeplatz ausgefahren, so wird dieses durch die Führung derart umgelenkt, dass das zweite Dokument von der Ebene des zweiten Aufnahmeplatzes in die Ebene des dritten Aufnahmeplatzes geführt wird. Hierzu weist die beispielsweise in Form einer keilförmigen Öffnung ausgebildete Führung bevorzugt einen Winkel von maximal 45°gegenüber der Ebene des dritten Aufnahmefaches auf, besonders bevorzugt von maximal 30°. Die keilförmige Öffnung ist gegenüber der Ebene des dritten Aufnahmefaches vorzugsweise symmetrisch. Hierdurch wird eine variable Zuführung des zweiten Dokuments oberhalb oder unterhalb der Ebene ermöglicht. Alternativ kann die Führung in Form von insbesondere seitlichen Schlitzen ausgeführt sein.

Vorteil dieser Ausführungsform ist, dass ein Drehen der Austauschvorrichtung zwischen zwei Bearbeitungsstationen nicht notwendig ist, um das Dokument an der folgenden Bearbeitungsstation übergeben zu können. Dadurch kann in der nachfolgenden Station zum Beispiel die gleiche Seite des Dokuments bearbeitet werden. Es ist jedoch auch möglich, dass die Austauschvorrichtung dennoch drehbar ausgeführt ist, damit das Dokument gezielt gedreht werden kann, wenn eine Drehung des Dokuments, zum Beispiel zur Bearbeitung der Rückseite, gewünscht ist.

In einer weiteren bevorzugten Ausführungsform des erfindungsgemäßen Verfahrens wird die Austauschvorrichtung während des Einfahrens des ersten Dokuments und des Ausfahrens des zweiten Dokuments derart versetzt, dass zunächst der erste Aufnahmeplatz und der dritte Aufnahmeplatz in einer Ebene liegen und am Ende des Austausches der zweite und der dritte Aufnahmeplatz in einer Ebene liegen, d.h. die Ebenen des ersten und des zweiten Aufnahmeplatzes werden verschoben, um mit der Ebene des dritten Aufnahmeplatzes zu fluchten. Der Vorteil dieser Ausführungsform ist, dass die Verbiegung der Dokumente durch die keilförmige Öffnung und somit die Belastung für die Karte reduziert wird. Dadurch wird die Lebensdauer der Dokumente erhöht.

Ausführungsbeispiele der Erfindung werden nun unter Bezugnahme auf die beigefügten Figuren beschrieben. Die einzelnen Figuren zeigen:
- Fig. 1:: eine erste Ausführungsform einer erfindungsgemäßen Austauschvorrichtung beim Dokumentenwechsel in einer schematischen Darstellung in Seitenansicht;
- Fig. 2:: eine zweite Ausführungsform einer erfindungsgemäßen Austauschvorrichtung beim Dokumentenwechsel in einer schematischen Darstellung in Seitenansicht;
- Fig. 3:: eine dritte Ausführungsform einer erfindungsgemäßen Austauschvorrichtung schematisch im Querschnitt;
- Fig. 4:: eine vierte Ausführungsform einer erfindungsgemäßen Austauschvorrichtung schematisch im Querschnitt;
- Fig. 5:: eine fünfte Ausführungsform einer erfindungsgemäßen Austauschvorrichtung in einer schematischen Darstellung in Frontansicht, a) mit Reibrollen, b) mit Reibwalzen;
- Fig. 6:: eine sechste Ausführungsform einer erfindungsgemäßen Austauschvorrichtung in einer schematischen Darstellung in Seitenansicht in verschiedenen Stadien der Dokumentenübergabe;
- Fig. 7:: eine siebente Ausführungsform einer erfindungsgemäßen Austauschvorrichtung in einer schematischen Darstellung im Querschnitt in verschiedenen Stadien der Dokumentenübergabe.

Gleiche Bezugsziffern bezeichnen in den Figuren gleiche Elemente.

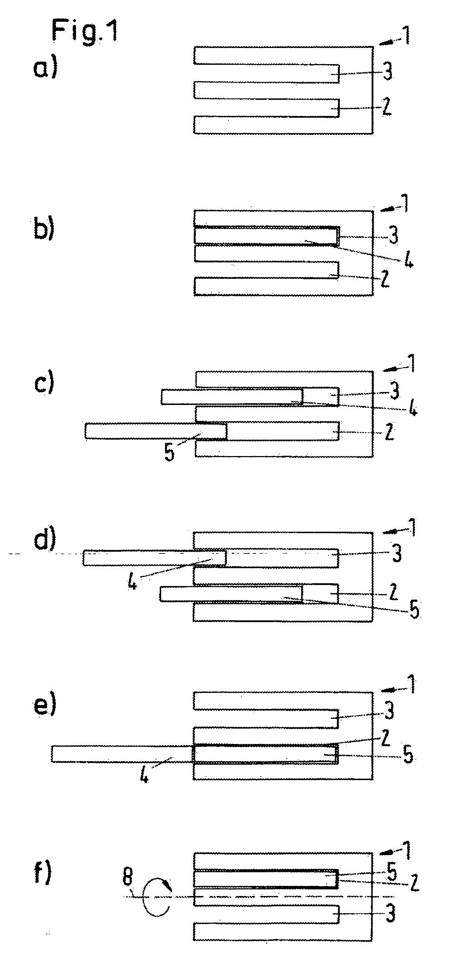

In Fig. 1 ist in schematischer Seitenansicht eine erste Ausführungsform einer erfindungsgemäßen Austauschvorrichtung 1 beim Dokumentenwechsel an einer Bearbeitungsstation gezeigt. In Fig. 1 a ist die Austauschvorrichtung 1 leer. Erkennbar sind das erste Aufnahmefach 2 und das zweite Aufnahmefach 3. Zu Beginn befindet sich, wie in Fig. 1b dargestellt, ein zweites Dokument 4 in dem zweiten Aufnahmefach 3. Die Größe jedes Aufnahmefaches entspricht etwa der Größe des auszutauschenden Dokuments. Das zweite Dokument 4 ist zum Beispiel ein nicht personalisierter Kartenrohling, in welchen in einer geeigneten Bearbeitungsstation mittels Lasergravur die personenbezogenen Daten des zukünftigen Dokumenteninhabers eingeschrieben werden sollen. Ein erstes Dokument 5 befindet sich in einem dritten Aufnahmefach (nicht dargestellt), das sich benachbart zum zweiten Aufnahmefach 2 befindet. Das dritte Aufnahmefach gehört zum Beispiel zu der Bearbeitungsstation, beispielsweise einem Modul zur Laserpersonalisierung. In der Bearbeitungsstation wurde das erste Dokument 5 bearbeitet. Beispielsweise wurden mittels Lasergravur personenbezogene Daten in das erste Dokument 5 eingeschrieben. Wie in Fig. 1c dargestellt, werden nun synchron das erste bereits bearbeitete Dokument 5 in das erste Aufnahmefach 2 eingeführt und das zweite noch unbearbeitete Dokument 4 aus dem zweiten Aufnahmefach 3 ausgefahren. In Fig. 1d ist die Situation zu einem späteren Zeitpunkt dargestellt: das erste Dokument 5 ist fast vollständig in das erste Aufnahmefach 2 eingefahren, und das zweite Dokument 4 ist aus dem zweiten Aufnahmefach 3 fast vollständig ausgefahren. Ist das erste Dokument 5 vollständig in das erste Aufnahmefach 2 eingefahren, so ist das zweite Dokument 4 vollständig aus dem zweiten Aufnahmefach 3 ausgefahren, wie in Fig. 1e dargestellt. Das zweite Dokument 4 ist in diesem Falle durch die Schwerkraft in das dritte Aufnahmefach (nicht dargestellt) gefallen und befindet sich nun in derselben Ebene wie das erste Dokument 5 im ersten Aufnahmefach 2. Das zweite Dokument kann nun von der Bearbeitungsstation bearbeitet werden. Beispielsweise können personenbezogene Daten mittels Lasergravur eingebracht werden. Soll das erste Dokument 5, welches sich im ersten Aufnahmefach 2 befindet, zum Beispiel noch einem weiteren Personalisierungsschritt unterzogen werden, d.h. bezüglich dieses weiteren Bearbeitungsschrittes ist dieses Dokument dann ein noch unbearbeitetes Dokument, sollen in einer hierzu geeigneten weiteren Bearbeitungsstation zum Beispiel noch personenbezogene Daten auf einen RF-Chip gespeichert werden, so ist es bevorzugt, dass die Austauschvorrichtung 1 um 180° (Pfeil) um eine in der Abbildungsebene liegende hier horizontale Symmetrieachse 8 gedreht wird. Hierdurch tauschen die Aufnahmefächer, wie in Fig. 1f gezeigt, die Position, so dass sich nun das erste Aufnahmefach 2 mit dem (nunmehr noch unbearbeiteten) ersten Dokument 5 in der oberen Position befindet. Dies entspricht der in Fig. 1b dargestellten Konstellation, in der sich das erste Aufnahmefach allerdings in der unteren Position befindet. Die Drehung der Austauschvorrichtung 1 kann bereits während des Transportes zu der weiteren Bearbeitungsstation vorgenommen werden. Dort wird nun das sich im nunmehr oberen Aufnahmefach 2 befindende noch unbearbeitete Dokument 5 an diese weitere Bearbeitungsstation zur Personalisierung übergeben. Der vorstehend beschriebene Vorgang kann dann an dieser weiteren Personalisierungsstation wiederholt werden.

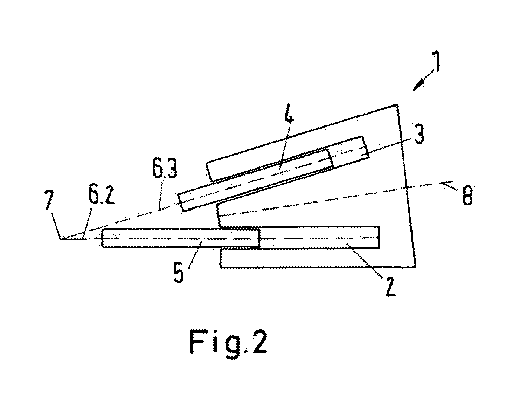

Das erste Aufnahmefach 2 und das zweite Aufnahmefach 3 müssen nicht, wie in Fig. 1 dargestellt, parallel zueinander verlaufen. In Fig. 2 ist eine alternative Ausführungsform der erfindungsgemäßen Austauschvorrichtung 1 dargestellt. Die Austauschvorrichtung 1 weist ein erstes Aufnahmefach 2, in welches ein erstes bereits bearbeitetes Dokument 5 eingefahren wird, und ein zweites Aufnahmefach 3 auf, aus welchem ein zweites noch unbearbeitetes Dokument 4 ausgefahren wird, auf. Das erste Dokument 5 im ersten Aufnahmefach 2 liegt in der Ebene 6.2, und das zweite Dokument 4 im zweiten Aufnahmefach 3 liegt in der Ebene 6.3. Beide Ebenen schneiden sich in der Geraden 7. Bevorzugter Weise entspricht der Abstand zwischen der Gerade 7 und dem zur Gerade 7 nächstliegenden Teil der Austauschvorrichtung 1 der Länge der Dokumente 4, 5, sodass eines der Dokumente 4, 5 in diesem Bereich vor der Austauschvorrichtung 1 abgelegt werden kann. Die Austauschvorrichtung 1 weist eine Symmetrieachse 8 bezüglich des ersten Aufnahmefaches 2 und des zweiten Aufnahmefaches 3 auf. Die Symmetrieachse 8 verläuft ebenfalls durch die Gerade 7. Durch Drehung der Austauschvorrichtung 1 um die Symmetrieachse 8 (um 180°) können das erste Aufnahmefach 2 und das zweite Aufnahmefach 3 gegeneinander vertauscht werden.

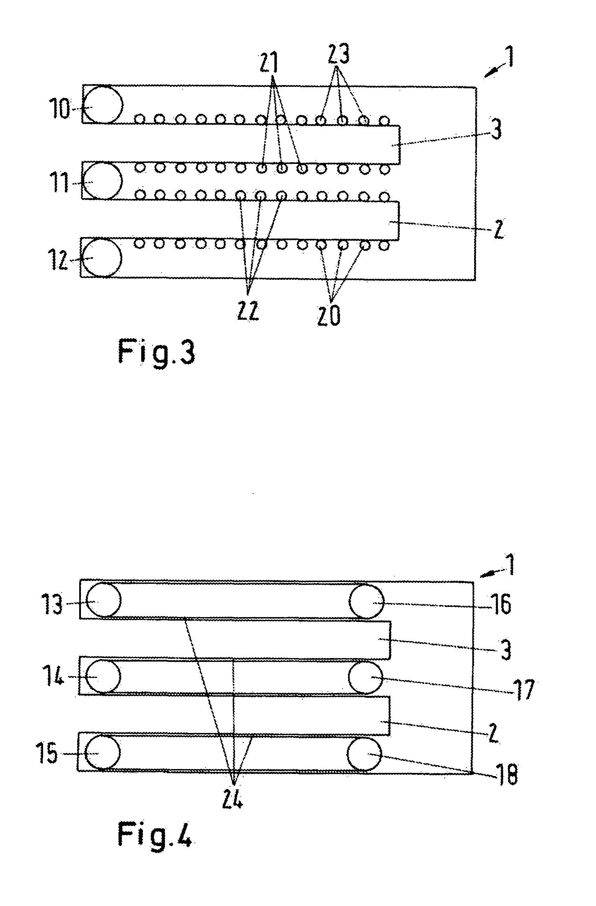

In Fig. 3 ist ein Querschnitt durch eine weitere Ausführungsform einer erfindungsgemäßen Austauschvorrichtung 1 in schematischer Darstellung gezeigt. Die Austauschvorrichtung weist eine obere Reibrolle 10, eine mittlere Reibrolle 11 und eine untere Reibrolle 12, jeweils im Bereich der Öffnungen der Aufnahmefächer 2, 3 nach außen, auf. Diese Reibrollen dienen dazu, die Dokumente ein- und auszufahren. Besonders bevorzugt ist nur die mittlere Reibrolle 11 angetrieben. Dadurch, dass die mittlere Reibrolle 11 sowohl ein Dokument in das erste Aufnahmefach 2 einfährt als auch ein Dokument aus dem zweiten Aufnahmefach 3 ausfährt, ist gewährleistet, dass das Einfahren und das Ausfahren synchron erfolgt. Die mittlere Reibrolle 11 und die obere Reibrolle 10 sowie die mittlere Reibrolle 11 und die untere Reibrolle 12 können jeweils genau um den Betrag der Dicke des Dokumentes von einander beabstandet sein. Besonders bevorzugt sind die obere Reibrolle 10 und die untere Reibrolle 12 jedoch federnd gelagert, sodass diese jeweils durch eine Feder in Richtung der angetriebenen mittleren Reibrolle 11 gedrückt werden. Hierdurch wird eine kraftschlüssige Verbindung zwischen der mittleren Reibrolle 11 und den Dokumenten bei deren Transport gewährleistet. Ferner können das erste Aufnahmefach 2 und das zweite Aufnahmefach 3 mit weiteren Führungsrollen 20, 21, 22, 23 ausgerüstet sein. Diese Führungsrollen 20, 21, 22, 23 dienen nur dazu, ein in eines der Aufnahmefächer 2, 3 aufgenommenes Dokument zu stabilisieren und ein Verkratzen der Dokumentenoberfläche beim Ein- und Ausfahren zu verhindern.

In Fig. 4 ist ein Querschnitt durch eine weitere Ausführungsform der erfindungsgemäßen Austauschvorrichtung 1 in schematischer Darstellung gezeigt. Die Austauschvorrichtung 1 weist eine obere, vordere Rolle 13, eine mittlere, vordere Rolle 14 und eine untere, vordere Rolle 15 sowie eine obere, hintere Rolle 16, eine mittlere, hintere Rolle 17 und eine untere, hintere Rolle 18 auf, wobei die Rollen jeweils paarweise ein Band 24 führen und antreiben. Vorteil dieser Ausführungsform ist es, dass die Dokumente nur mit dem Band 24 in Berührung kommen, welches aus einem weichen Material ausgebildet sein kann, sodass eine Beschädigung der Dokumentenoberfläche, insbesondere ein Verkratzen, verhindert wird. Da die Dokumente über die Bänder 24 angetrieben werden und sie daher gegenüber den Bändern 24 keine Relativbewegung ausführen, kann sogar ausgeschlossen werden, dass auf den Dokumenten anhaftender Staub die Dokumente zerkratzt.

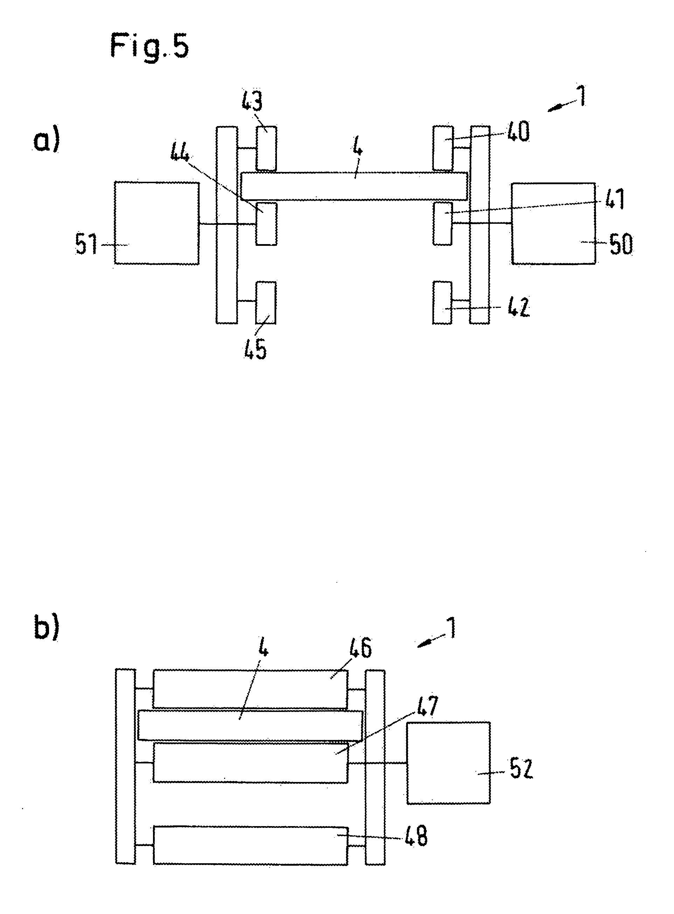

In Fig. 5a ist eine weitere Ausführungsform der erfindungsgemäßen Austauschvorrichtung 1 in einer schematischen Darstellung in Frontansicht gezeigt. Die Austauschvorrichtung verfügt über obere Reibrollen 40, 43, mittlere Reibrollen 41, 44 und untere Reibrollen 42, 45. In die Austauschvorrichtung 1 ist ein zweites noch unbearbeitetes Dokument 4 eingefahren. Das Dokument 4 wird durch die oberen Reibrollen 40, 43 und die mittleren Reibrollen 41, 44 gehalten und geführt. Die rechte mittlere Reibrolle 41 kann über den rechten Motor 50 und die linke mittlere Reibrolle 44 über den linken Motor 51 angetrieben werden, sodass das Dokument 4 von den Reibrollen 41, 44 transportiert wird. Durch die schmale Ausführung der Reibrollen 40, 41, 42, 43, 44, 45 berühren diese nur die Ränder des zweiten Dokuments 4, sodass Kratzer gegebenenfalls nur im äußeren Bereich entstehen und dadurch als weniger störend empfunden werden. Im Verlauf des Dokumentenaustausches wird das zweite Dokument 4 aus der Austauschvorrichtung 1 ausgegeben, und ein (hier nicht dargestelltes) erstes bereits bearbeitetes Dokument wird gleichzeitig in das erste Aufnahmefach zwischen den Rollen 41, 42, 44, 45 eingeführt. Eine alternative Ausführungsform ist in Fig. 5b gezeigt. Diese Austauschvorrichtung 1 verfügt über Reibwalzen 46, 47, 48, welche sich über die Breite der Austauschvorrichtung 1 erstrecken. Die mittlere Reibwalze 47 wird über den Motor 52 angetrieben. Hierdurch besteht zwar die erhöhte Gefahr der Bildung von Kratzern. Jedoch können auch Dokumente mit verschiedenen Formaten, zum Beispiel ID1 (85,6 mm × 54 mm) und ID2 (105 mm × 74 mm), bearbeitet werden. Wie im vorigen Falle (Fig. 5a) wird das zweite noch unbearbeitete Dokument 4 im Verlauf des Dokumentenaustausches aus der Austauschvorrichtung 1 ausgegeben, und ein (hier nicht dargestelltes) erstes bereits bearbeitetes Dokument wird gleichzeitig in den Raum zwischen den Walzen 47, 48 eingeführt.

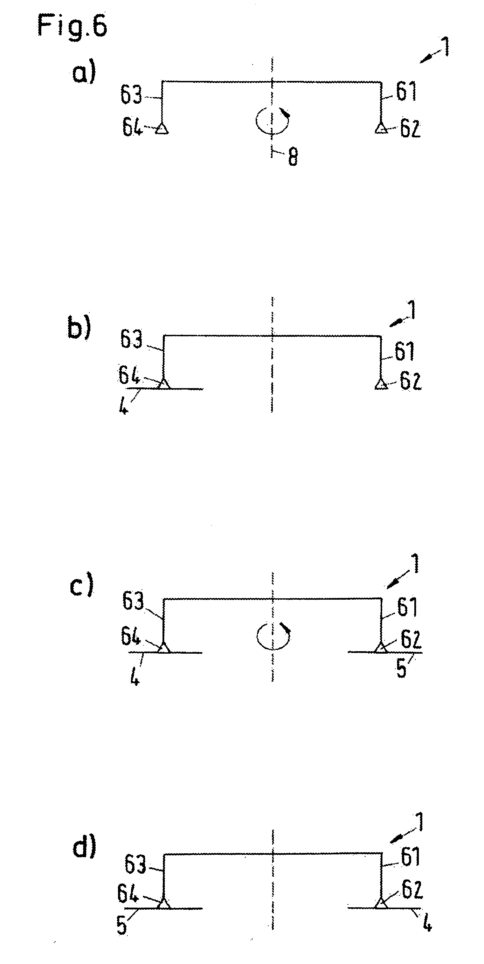

In Fig. 6 ist eine weitere Ausführungsform einer erfindungsgemäßen Austauschvorrichtung 1 in schematischer Darstellung in Seitenansicht gezeigt. Die Austauschvorrichtung 1 weist, wie in Fig. 6a dargestellt, einen ersten Arm 61 mit einer ersten Saugvorrichtung 62 und einen zweiten Arm 63 mit einer zweiten Saugvorrichtung 64 auf. Die Austauschvorrichtung 1 weist eine vertikale Symmetrieachse 8 auf und kann um diese gedreht werden (Pfeil). Unter der ersten Saugvorrichtung 62 ergibt sich ein erster Aufnahmeplatz für ein erstes bereits bearbeitetes Dokument 5 und unter der zweiten Saugvorrichtung 64 ein zweiter Aufnahmeplatz für ein zweites noch unbearbeitetes Dokument 4. Wie in Fig. 6b dargestellt, kann die Austauschvorrichtung 1 ein zweites Dokument 4 in den zweiten Aufnahmeplatz aufnehmen, indem dieses über die zweite Saugvorrichtung 64 mit dem ersten Arm 63 verbunden wird. Zum Austausch eines ersten Dokuments 5, welches sich auf einem dritten Aufnahmeplatz einer Bearbeitungsstation für Dokumente (nicht gezeigt, rechts von der Austauschvorrichtung) befindet, wird die Austauschvorrichtung 1 so positioniert, dass der freie erste Arm 61 mit der ersten Saugvorrichtung 62 über dem ersten Dokument 5 in dem dritten Aufnahmeplatz positioniert wird, wie in Fig. 6c dargestellt. Hierdurch fallen der erste Aufnahmeplatz der Austauschvorrichtung 1 und der dritte Aufnahmeplatz der Bearbeitungsstation zusammen. Durch die erste Saugvorrichtung 62 wird das erste Dokument 5 mit dem ersten Arm 61 verbunden. Durch Drehung um die Rotationsachse (Pfeil) werden synchron das zweite Dokument 4 auf den dritten Aufnahmeplatz an der Bearbeitungsstation ausgefahren und das erste Dokument 5 auf den ersten Aufnahmeplatz eingefahren. Das zweite Dokument 4 wird dann von der Saugvorrichtung 62 getrennt, und dadurch wird der Austausch der Dokumente abgeschlossen. Im Endzustand dieses Austauschzyklus' befindet sich das erste (bereits bearbeitete) Dokument 5 auf dem ersten Aufnahmeplatz in der Austauschvorrichtung 1, und das zweite (noch nicht bearbeitete) Dokument 4 befindet sich außerhalb der Austauschvorrichtung 1 auf dem dritten Aufnahmeplatz der Bearbeitungsstation. Dort kann das zweite Dokument 4 bearbeitet werden, oder von dort kann es an den Bearbeitungsplatz in der Station befördert werden.

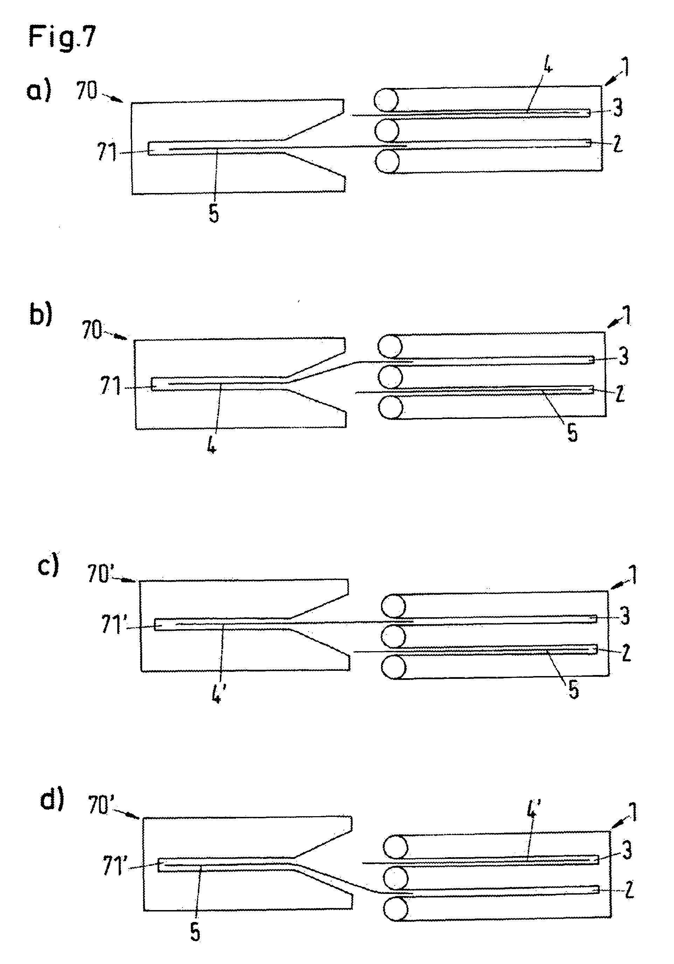

In Fig. 7 ist eine weitere Ausführungsform einer Austauschvorrichtung 1 in schematischer Darstellung im Querschnitt gezeigt. Die einzelnen Aufnahmefächer 2, 3 der Austauschvorrichtung 1 können insbesondere jeweils mit Führungsschlitzen für die Dokumente, die beispielsweise Karten sein können, versehen sein. Diese Führungsschlitze können in die Seitenwände der Fächer 2, 3 eingelassen sein (beidseitig an einander gegenüberliegenden Seitenwänden). Derartige Führungsschlitze können auch in den Aufnahmevorrichtungen 70, 70' der Bearbeitungsstationen vorgesehen sein. Gegenüber der Austauschvorrichtung 1 ist eine erste Aufnahmevorrichtung 70 einer Bearbeitungsstation (nicht gezeigt) angeordnet. Die Aufnahmevorrichtung 70 weist ein drittes Aufnahmefach 71 für ein Dokument auf. Dieses dritte Aufnahmefach 71 weist eine zur Austauschvorrichtung hin ausgerichtete keilförmig erweiterte Öffnung auf. In Fig. 7a ist gezeigt, wie die Austauschvorrichtung 1 zu einer ersten Bearbeitungsstation gelangt, welche ein drittes Aufnahmefach 71 aufweist. In dem dritten Aufnahmefach 71 befindet sich ein erstes bereits bearbeitetes Dokument 5. Das erste Dokument 5 ist in der Bearbeitungsstation beispielsweise mittels Laserpersonalisierung individualisiert worden. In der Austauschvorrichtung 1 befindet sich ein zweites noch unbearbeitetes Dokument 4 in einem zweiten Aufnahmefach 3, wobei das zweite Dokument 4 zum Beispiel noch nicht personalisiert ist. Die Austauschvorrichtung 1 wird derart an die Aufnahmevorrichtung 70 heran gebracht, dass sich das dritte Aufnahmefach 71 und das erste Aufnahmefach 2 der Austauschvorrichtung 1 auf gleicher Höhe gegenüberstehen. Das ist notwendig, damit die Austauschvorrichtung 1 das erste Dokument 5 erfassen und einfahren kann. Während das erste Dokument 5 in das erste Aufnahmefach 2 eingefahren wird, wird das zweite Dokument 4 aus dem zweiten Aufnahmefach ausgefahren. Durch die keilförmig erweiterte Öffnung wird das zweite Dokument 4, welches sich oberhalb des dritten Aufnahmefaches 71 der ersten Aufnahmevorrichtung 70 befindet, in diese geführt, wie in Fig. 7b zu erkennen. Nach dem Abschluss des Austausches befindet sich das zweite Dokument 4 in dem dritten Aufnahmefach 71 der ersten Aufnahmevorrichtung 70 und das erste Dokument 5 in dem ersten Aufnahmefach 2 der Austauschvorrichtung 1. Das zweite Dokument kann nun in der ersten Bearbeitungsstation bearbeitet, beispielsweise personalisiert werden.

Die Austauschvorrichtung 1 wird dann von der ersten Bearbeitungsstation entfernt. Wenn die Austauschvorrichtung 1 jetzt eine zweite Bearbeitungsstation anfährt, so befindet sich, wie in Fig. 7c gezeigt, das erste bezüglich-des-in-dieser Bearbeitungsstation noch durchzuführenden Bearbeitungsschrittes unbearbeitete Dokument 5 in dem ersten Aufnahmefach 2. Bei der zweiten Bearbeitungsstation kann es sich zum Beispiel um eine Lackierstation oder eine Inkjet-Personalisierung handeln. In der zweiten Aufnahmevorrichtung 70' der zweiten Bearbeitungsstation befindet sich ein anderes zweites, in diesem Falle bereits bearbeitetes, Dokument 4' in einem vierten Aufnahmefach 71'. Im Gegensatz zum in Fig. 7a dargestellten Fall wird nun die Austauschvorrichtung 1 derart an die zweite Aufnahmevorrichtung 70' herangefahren, dass das vierte Aufnahmefach 71' der zweiten Aufnahmevorrichtung 70' und das zweite Aufnahmefach 3 der Austauschvorrichtung 1 sich auf gleicher Höhe einander gegenüber stehen. Dadurch ist das erste Aufnahmefach 2 mit dem ersten Dokument 5 unter dem vierten Aufnahmefach 71' der zweiten Aufnahmevorrichtung 70' angeordnet. Die Austauschvorrichtung 1 fährt das andere zweite Dokument 4' ein, während das erste Dokument 5 ausgefahren wird. Durch die keilförmig erweiterte Öffnung wird das erste Dokument 5 in das vierte Aufnahmefach 71' geführt. Nach vollständigem Dokumentenwechsel kann die Austauschvorrichtung 1 die zweite Bearbeitungsstation verlassen.

Dieses Verfahren hat den Vorteil, dass die Dokumente nicht gedreht werden, die Oberseite eines Dokuments immer nach oben zeigt. Dies ist vorteilhaft, wenn nur eine Seite des Dokuments bearbeitet bzw. personalisiert werden soll. Der Abstand zwischen dem ersten Aufnahmefach 2 und dem zweiten Aufnahmefach 3 ist in dieser Ausführungsform bevorzugt besonders gering. Insbesondere beträgt der Abstand höchstens 2 mm, besonders bevorzugt höchstens 1 mm.

## Patentansprüche

1. An einer Bearbeitungsstation für zu bearbeitende Dokumente platzierbare Vorrichtung (1), die zum Austauschen von bereits bearbeiteten Dokumenten gegen noch unbearbeitete Dokumente an der Bearbeitungsstation geeignet ist, wobei die Vorrichtung (1) einen ersten Aufnahmeplatz (2) zur Aufnahme eines ersten bearbeiteten Dokuments (5) und einen zweiten Aufnahmeplatz (3) zur Aufnahme eines zweiten unbearbeiteten Dokuments (4) aufweist, wobei die Vorrichtung (1) ferner über Mittel zum Einfahren des ersten Dokuments (5) auf den ersten Aufnahmeplatz sowie Mittel zum Ausfahren des zweiten Dokuments (4) von dem zweiten Aufnahmeplatz verfügt, wobei das Einfahren des ersten Dokumentes (5) auf den ersten Aufnahmeplatz synchron zum Ausfahren des zweiten Dokumentes (4) von dem zweiten Aufnahmeplatz erfolgt, **dadurch gekennzeichnet dass** die Vorrichtung zum Austauschen (1) gegenüber dem ersten und dem zweiten Aufnahmeplatz wenigstens eine Symmetrieachse (8) aufweist und um die Symmetrieachse (8) drehbar ist, sodass durch die Drehung der erste Aufnahmeplatz (2) und der zweite Aufnahmeplatz (3) vertauscht werden.

2. Vorrichtung (1) zum Austauschen von bereits bearbeiteten Dokumenten gegen noch unbearbeitete Dokumente gemäß Anspruch 1, **dadurch gekennzeichnet, dass** der erste Aufnahmeplatz ein erstes Aufnahmefach (2) ist und der zweite Aufnahmeplatz ein zweites Aufnahmefach (3) ist.

3. Vorrichtung (1) zum Austauschen von bereits bearbeiteten Dokumenten gegen noch unbearbeitete Dokumente gemäß einem der vorangegangenen Ansprüche, **dadurch gekennzeichnet, dass** der erste Aufnahmeplatz und der zweite Aufnahmeplatz zur Aufnahme jeweils eines kartenförmigen Dokuments im Format ID1 ausgebildet sind.

4. Vorrichtung (1) zum Austauschen von bereits bearbeiteten Dokumenten gegen noch unbearbeitete Dokumente gemäß einem der vorangegangenen Ansprüche, **dadurch gekennzeichnet, dass** die Mittel zum Einfahren und die Mittel zum Ausfahren durch Reibrollen (10, 11, 12) und/oder Reibwalzen (46, 47, 48) gebildet sind.

5. Vorrichtung zum Austauschen von bereits bearbeiteten Dokumenten gegen noch unbearbeitete Dokumente gemäß einem der vorangegangenen Ansprüche, **dadurch gekennzeichnet, dass** die Mittel zum Einfahren und die Mittel zum Ausfahren wenigstes eine gemeinsame Reibrolle (11) und/oder Reibwalze (47) umfassen.

6. Vorrichtung (1) zum Austauschen von bereits bearbeiteten Dokumenten gegen noch unbearbeitete Dokumente gemäß einem der vorangegangenen Ansprüche, **dadurch gekennzeichnet, dass** der zweite Aufnahmeplatz oberhalb des ersten Aufnahmeplatzes angeordnet ist.

7. Anordnung einer an einer Bearbeitungsstation für zu bearbeitende Dokumente platzierbaren Vorrichtung (1), die zum Austauschen von bearbeiteten Dokumenten gegen noch unbearbeitete Dokumente geeignet ist, gemäß einem der Ansprüche 1 bis 6 und einer Aufnahmevorrichtung (70, 70'), wobei die Aufnahmevorrichtung (70, 70') einen dritten Aufnahmeplatz aufweist und der dritte Aufnahmeplatz der Aufnahmevorrichtung (70, 70') und der erste Aufnahmeplatz der Vorrichtung zum Austauschen (1) in der gleichen Ebene angeordnet sind und wobei die Vorrichtung (1) gegenüber dem ersten und dem zweiten Aufnahmeplatz wenigstens eine Symmetrieachse (8) aufweist und um die Symmetrieachse (8) drehbar ist, sodass durch die Drehung der erste Aufnahmeplatz und der zweite Aufnahmeplatz vertauscht werden.

8. Verfahren zum Austauschen eines ersten bearbeiteten Dokuments (5) gegen ein zweites noch unbearbeitetes Dokument (4) an einer Bearbeitungsstation für die zu bearbeitenden Dokumente, wobei das zweite Dokument (4) sich zunächst auf einem zweiten Aufnahmeplatz (3) einer an der Bearbeitungsstation platzierten Vorrichtung (1) zum Austauschen von bearbeiteten Dokumenten gegen noch unbearbeitete Dokumente gemäß einem der Ansprüche 1 bis 6 befindet, das erste Dokument (5) sich zunächst auf einem dritten Aufnahmeplatz befindet und der dritte Aufnahmeplatz Bestandteil der Bearbeitungsstation ist, umfassend folgende Verfahrensschritte:
- Übergeben des ersten Dokuments (5) von dem dritten Aufnahmeplatz an den ersten Aufnahmeplatz (2) der Vorrichtung zum Austauschen (1) und
- gleichzeitiges Übergeben des zweiten Dokuments (4) von dem zweiten Aufnahmeplatz (3) der Vorrichtung zum Austauschen (1) an den dritten Aufnahmeplatz
- Vertauschen des ersten und des zweiten Aufnahmeplatzes (2, 3) nach der Übergabe des zweiten Dokuments (4) vom zweiten Aufnahmeplatz an den dritten Aufnahmeplatz durch Drehung der Vorrichtung zum Austauschen (1).

9. Verfahren zum Austauschen eines ersten bearbeiteten Dokuments gegen ein zweites noch unbearbeitetes Dokument gemäß Anspruch 8, **dadurch gekennzeichnet, dass** vor dem Austausch der erste Aufnahmeplatz und der dritte Aufnahmeplatz in eine Ebene gebracht werden.

10. Verfahren zum Austauschen eines ersten bearbeiteten Dokuments gegen ein zweites noch unbearbeitetes Dokument gemäß einem der Ansprüche 8 und 9, **dadurch gekennzeichnet, dass** das zweite Dokument (4) nach vollständigem Ausfahren aus der Vorrichtung (1) auf den dritten Aufnahmeplatz fällt.

## Claims

1. An apparatus (1) which can be placed at a processing station for documents to be processed and which is suitable for interchanging already processed documents for as yet unprocessed documents at the processing station, with the apparatus (1) comprising a first holding position (2) for holding a first processed document (5) and a second holding position (3) for holding a second unprocessed document (4), with the apparatus (1) also comprising means for inserting the first document (5) into the first holding position and means for removing the second document (4) from the second holding position, with the inserting of the first document (5) into the first holding position being effected synchronously with the removing of the second document (4) from the second holding position, wherein the apparatus for interchanging (1) comprises opposite the first and the second holding position at least one axis of symmetry (8) and can be rotated about the axis of symmetry (8) such that the first holding position (2) and the second holding position (3) are transposed by the rotation.

2. The apparatus (1) for interchanging already processed documents for as yet unprocessed documents of claim 1, wherein the first holding position is a first holding pocket (2) and the second holding position is a second holding pocket (3).

3. The apparatus (1) for interchanging already processed documents for as yet unprocessed documents of any one of the preceding claims, wherein the first holding position and the second holding position are each configured to hold a card-shaped document with the format ID1.

4. The apparatus (1) for interchanging already processed documents for as yet unprocessed documents of any one of the preceding claims, wherein the means for inserting and the means for removing are formed by friction rollers (10, 11, 12) and/or friction drums (46, 47, 48).

5. The apparatus for interchanging already processed documents for as yet unprocessed documents of any one of the preceding claims, wherein the means for inserting and the means for removing comprise at least one common friction roller (11) and/or friction drum (47).

6. The apparatus (1) for interchanging already processed documents for as yet unprocessed documents of any one of the preceding claims, wherein the second holding position is arranged above the first holding position.

7. Arrangement of an apparatus (1) which can be placed at a processing station for documents to be processed and which is suitable for interchanging already processed documents for as yet unprocessed documents, according to any one of claims 1 to 6, and of a holding apparatus (70, 70'), with the holding apparatus (70, 70') comprising a third holding position, and the third holding position of the holding apparatus (70, 70') and the first holding position of the apparatus for interchanging (1) being disposed on the same level and with the apparatus (1) comprising, opposite the first and second holding position, at least one axis of symmetry (8) and can be rotated about the axis of symmetry (8) such that the first holding position and the second holding position are transposed by the rotation.

8. A method for interchanging a first processed document (5) for a second as yet unprocessed document (4) at a processing station for the documents to be processed, with the second document (4) being initially present at a second holding position (3) of an apparatus (1) placed at the processing station for interchanging processed documents for as yet unprocessed documents according to any one of claims 1 to 6, with the first document (5) being initially present at a third holding position and with the third holding position being part of the processing station, comprising the following steps:
- transferring the first document (5) from the third holding position to the first holding position (2) of the apparatus for interchanging (1) and
- simultaneously transferring the second document (4) from the second holding position (3) of the apparatus for interchanging (1) to the third holding position
- after the transfer of the second document (4) from the second holding position to the third holding position, transposing the first and second holding positions (2,3) by rotating the apparatus for interchanging (1).

9. The method for interchanging a first processed document for a second as yet unprocessed document of claim 8, wherein the first holding position and the third holding position are moved onto one level prior to the interchanging.

10. The method for interchanging a first processed document for a second as yet unprocessed document of either of claims 8 and 9, wherein the second document (4) falls to the third holding position after its complete removal from the apparatus (1).

## Revendications

1. Dispositif (1) pouvant être placé sur un poste de traitement pour des documents à traiter, qui est approprié au remplacement de documents déjà traités par des documents qui ne sont pas encore traités sur le poste de traitement, le dispositif (1) présentant un premier emplacement de réception (2) pour la réception d'un premier document traité (5) et un deuxième emplacement de réception (3) pour la réception d'un second document non traité (4), le dispositif (1) disposant en outre de moyens pour la rentrée du premier document (5) sur le premier emplacement de réception ainsi que de moyens pour la sortie du second document (4) du deuxième emplacement de réception, la rentrée du premier document (5) sur le premier emplacement de réception étant effectuée de manière synchrone à la sortie du second document (4) du deuxième emplacement de réception, **caractérisé en ce que** le dispositif pour le remplacement (1) présente par rapport au premier et au deuxième emplacement de réception au moins un axe de symétrie (8) et peut tourner autour de l'axe de symétrie (8) de sorte que, par la rotation, le premier emplacement de réception (2) et le deuxième emplacement de réception (3) soient échangés.

2. Dispositif (1) pour le remplacement de documents déjà traités par des documents qui ne sont pas encore traités selon la revendication 1, **caractérisé en ce que** le premier emplacement de réception est un premier compartiment de réception (2) et le deuxième emplacement de réception est un second compartiment de réception (3).

3. Dispositif (1) pour le remplacement de documents déjà traités par des documents qui ne sont pas encore traités selon l'une quelconque des revendications précédentes, **caractérisé en ce que** le premier emplacement de réception et le deuxième emplacement de réception sont réalisés pour la réception respectivement d'un document en forme de carte au format ID1.

4. Dispositif (1) pour le remplacement de documents déjà traités par des documents qui ne sont pas encore traités selon l'une quelconque des revendications précédentes, **caractérisé en ce que** les moyens pour la rentrée et les moyens pour la sortie sont formés par des rouleaux de friction (10, 11, 12) et/ou des cylindres de friction (46, 47, 48).

5. Dispositif pour le remplacement de documents déjà traités par des documents qui ne sont pas encore traités selon l'une quelconque des revendications précédentes, **caractérisé en ce que** les moyens pour la rentrée et les moyens pour la sortie comportent au moins un rouleau de friction (11) et/ou un cylindre de friction (47) commun.

6. Dispositif (1) pour le remplacement de documents déjà traités par des documents qui ne sont pas encore traités selon l'une quelconque des revendications précédentes, **caractérisé en ce que** le deuxième emplacement de réception est agencé au-dessus du premier emplacement de réception.

7. Agencement d'un dispositif (1) pouvant être placé sur un poste de traitement pour des documents à traiter qui est approprié au remplacement de documents traités par des documents qui ne sont pas encore traités, selon l'une quelconque des revendications 1 à 6 et d'un dispositif de réception (70, 70'), le dispositif de réception (70, 70') présentant un troisième emplacement de réception et le troisième emplacement de réception du dispositif de réception (70, 70') et le premier emplacement de réception du dispositif pour le remplacement (1) étant agencés dans le même plan et le dispositif (1) présentant par rapport au premier et au deuxième emplacement de réception au moins un axe de symétrie (8) et pouvant être tourné autour de l'axe de symétrie (8) de sorte que par la rotation, le premier emplacement de réception et le deuxième emplacement de réception soient échangés.

8. Procédé pour le remplacement d'un premier document traité (5) par un second document (4) qui n'est pas encore traité sur un poste de traitement pour les documents à traiter, le second document (4) se trouvant tout d'abord sur un deuxième emplacement de réception (3) d'un dispositif (1) placé sur le poste de traitement pour le remplacement de documents traités par des documents qui ne sont pas encore traités selon l'une quelconque des revendications 1 à 6, le premier document (5) se trouvant tout d'abord sur un troisième emplacement et le troisième emplacement de réception faisant partie du poste de traitement, comprenant les étapes de procédé suivantes :
- la remise du premier document (5) du troisième emplacement de réception au premier emplacement de réception (2) du dispositif pour le remplacement (1) et
- la remise simultanée du second document (4) du deuxième emplacement de réception (3) du dispositif pour le remplacement (1) au troisième emplacement de réception,
- l'échange du premier et du deuxième emplacement de réception (2, 3) après la remise du second document (4) du deuxième emplacement de réception au troisième emplacement de réception par la rotation du dispositif pour le remplacement (1).

9. Procédé pour le remplacement d'un premier document traité par un second document qui n'est pas encore traité selon la revendication 8, **caractérisé en ce qu'**avant le remplacement, le premier emplacement de réception et le troisième emplacement de réception sont amenés dans un plan.

10. Procédé pour le remplacement d'un premier document traité par un second document qui n'est pas encore traité selon l'une quelconque des revendications 8 et 9, **caractérisé en ce que** le second document (4) tombe après sortie complète du dispositif (1) sur le troisième emplacement de réception.
